# FASCICULE DE BREVET EUROPEEN

(11) **EP 3 529 021 B1**
(45) Date de publication et mention de la délivrance du brevet: **03.12.2025**
(21) Numéro de dépôt: 17791337.3
(22) Date de dépôt: 23.10.2017
(51) Int. Cl.: B29B 17/02, B29B 17/04, B08B 3/10, B29L 7/00, B29K 105/06, B29L 31/00, B29K 711/12

(54) **DISPOSITIF COMPACT DE RECYCLAGE DE DÉCHETS PLASTIQUES**
KOMPAKTE RECYCLING-VORRICHTUNG FÜR KUNSTSTOFFABFÄLLE
COMPACT DEVICE FOR RECYCLING PLASTIC WASTE

(30) Priorité: 21.10.2016 FR 1660253
(43) Date de publication de la demande: 28.08.2019
(73) Titulaire: Suez International, 92800 Puteaux (FR)
(72) Inventeur: RIVAL, David, 37210 Vouvray (FR); PRIOU, Yann, 92040 PARIS LA DEFENSE Cedex (FR); PRESSE, Gildas, 56600 Lanester (FR)
(74) Mandataire: Fédit-Loriot
(86) Numéro de dépôt international: PCT/EP2017/077026
(87) Numéro de publication internationale: WO 2018/073455

(56) Documents cités:
- EP-A1- 2 050 516
- CN-A- 104 959 343
- CN-A- 104 959 343
- CN-U- 203 470 390
- DE-A1- 19 753 386
- DE-A1- 19 753 386
- TW-B- 277 018
- TW-B- 277 018
- TW-B- 277 018
- US-A- 4 512 811
- US-A- 4 512 811
- US-A1- 2013 119 171
- US-A1- 2015 114 887

## Description

### Domaine technique

La présente invention concerne un dispositif de recyclage des déchets, notamment des films plastiques et en particulier des films plastiques souples souillés provenant de l'industrie agroalimentaire. Les souillures de ce type de film empêchent leur valorisation en tant que matière première secondaire.

Plus spécifiquement, le présent système selon la présente invention vise à être installé directement sur le site des industriels producteurs de déchets plastiques afin de broyer, laver et désinfecter les films pour permettre leur valorisation auprès des filières de recyclage.

### Etat de la technique antérieur

En dépit d'une consommation croissante de matière plastique, la majeure partie des plastiques utilisés par les divers acteurs industriels, en particulier ceux du domaine agroalimentaire, sont voués à être incinérés ou enfouis. En effet, les films plastiques souples composés de résine de type Polyéthylène (PE), Polypropylène (PP), Polystyrène (PS), Polyamide (PA) et autres films complexes à base de ces résines souillées par des matières organiques ne sont pas acceptés par les filières de valorisation des déchets. La fraction organique dont ils sont chargés se dégrade très rapidement et une fois souillés, les moyens à mettre en œuvre pour laver ces types de plastiques sont complexes. En effet, les gaz issus de la dégradation des matières organiques imprègnent les plastiques d'odeurs persistantes qui ne permettent plus d'envisager leur recyclage. En pratique, très peu de solutions sont offertes pour le recyclage de tels plastiques. Des processus standards de recyclage sont proposés par des sociétés spécialisées dans le recyclage et sont prévues pour être appliqués à des matières plastiques en principe non souillées.

Ainsi, des solutions de broyage et de lavage existent sur le marché et elles s'adressent principalement à deux types de matières :
- Les plastiques rigides pour lesquels on trouve des solutions chez les professionnels du recyclage et non pas chez les producteurs de déchets du fait de l'important volume de l'installation.
- Les bâches agricoles pour lesquelles existent des solutions de traitement sur des filières spécialisées, impliquant de grosses installations et n'étant pas prévues pour le traitement de matières plastique souillés par de la matière organique.

La demande de brevet US 2013-0119171 divulgue un système de recyclage du plastique, incluant les films plastiques souples. Ce système implique un grand nombre d'étapes et une taille d'installation ne permettant pas une installation directe sur les sites industriels produisant les matières plastiques souillées. L'utilisation de nombreux appareils comme des bassins de lavages, des séchoirs et des filtres nécessite de disposer d'un espace conséquent pour pouvoir être mis en place, ce qui implique notamment une consommation importante en eau et en énergie. Ce type de dispositif étant donc principalement réservé aux industriels spécialisés dans le recyclage de tels plastiques, et non aux industriels producteurs de tels plastiques souillés. Une contrainte de ce dispositif est la nécessité de transporter les films plastiques souples jusqu'à la filière de recyclage, ce qui peut poser problème compte tenu de la dégradation rapide de la fraction organique contenue dans les films plastiques souples souillés, laissant une odeur persistante sur les plastiques qui ne permet plus d'envisager leur recyclage.

On connait dans l'état de la technique, le document de brevet TW277018B qui décrit un procédé et un appareil de recyclage de plastique.

Aussi existe-t-il un besoin de disposer de dispositifs moins encombrants, plus mobiles et pouvant être implantés, de façon temporaire ou permanente, sur le site de l'industriel sans modifications importantes de son implantation.

La présente invention a donc pour objet un système compact et éventuellement mobile, destiné à être installé directement sur les sites industriels où sont produits les déchets plastiques afin, laver et/ou désinfecter et éventuellement broyer les films plastiques souples souillés, en particulier par de la matière organique, en vue de permettre leur valorisation par lesdits industriels auprès des filières de recyclage.

### Exposé de l'invention

L'invention vise à remédier à tout ou partie des inconvénients de l'état de la technique identifiés ci-dessus, et notamment à proposer un dispositif permettant le recyclage des plastiques souillés.

Dans ce dessein, l'invention est définie par les revendications indépendantes. Des améliorations de l'invention sont définies par les revendications dépendantes.

Un aspect de l'invention se rapporte à un système de lavage de déchets comportant :
- une unité de réception adaptée pour recevoir des déchets dans au moins une zone de réception, pouvant être mobile ou statique,
- une unité de lavage des déchets comportant un premier moyen d'injection d'un fluide de lavage,
- un moyen de mise en mouvement relatif d'au moins l'unité de lavage et de l'unité de réception l'une par rapport à l'autre de sorte que, en fonctionnement du moyen de mise en mouvement relatif, au moins une partie de ladite zone de réception de l'unité de réception soit dans une première zone de portée du premier moyen d'injection ;
le système de lavage comporte également une première boucle de recirculation du fluide de lavage depuis une première zone de récupération du fluide de lavage vers le premier moyen d'injection.

La présente invention est configurée de sorte que la zone de réception reçoit des déchets comme des films plastiques souples souillés avec de la matière organique. L'unité de lavage comporte un premier moyen d'injection, une buse par exemple, et permet de traiter les déchets avec un fluide de lavage, préférentiellement une eau comportant au moins un agent de lavage et/ou un agent de désinfection, préférentiellement un tensioactif et/ou un agent désinfectant. Le tensioactif sera préférentiellement choisi parmi le groupe des détergents alcalins et l'agent désinfectant sera préférentiellement choisi parmi le groupe des désinfectants oxydants ou réducteurs, seuls ou en mélange. Le moyen de mise en mouvement relatif permet de s'assurer qu'au moins une partie de la zone de réception et donc des déchets se retrouvera dans une zone de portée du premier moyen d'injection et sera donc traitée avec un fluide de lavage. Dans le cas où le moyen d'injection est une buse, la zone de portée du moyen d'injection se définie par la zone de retombée du fluide : dans le cas où le fluide est de l'eau, cette zone de portée est assimilée à l'aire de dispersion de l'eau sur la zone de réception. Ainsi, il y'a une synergie entre la zone de réception et l'unité de lavage se matérialisant par le système de mise en mouvement relatif et il n'est plus nécessaire de disposer de bassins de lavages successifs pour traiter les déchets de façon efficace. Le système est par conséquent relativement compact et éventuellement mobile. Enfin, la première boucle de recirculation du fluide de lavage permet à l'unité de lavage de fonctionner en circuit fermé, le fluide de lavage est récupéré par la première zone de récupération pour être dirigé vers le premier moyen d'injection, ce qui permet d'effectuer des économies en fluide et en énergie, mais également en agent de lavage et/ou en agent de désinfection. Par exemple, la première zone de récupération du fluide de lavage peut être située dans un plan horizontal située à la verticale du premier moyen d'injection. L'invention telle que présentée permet d'aboutir à un système ayant une emprise au sol réduite, donc pouvant être directement installé chez les industriels producteurs de déchets. L'invention telle que présentée permet d'aboutir à un système pouvant être facilement transportable sur la remorque d'un camion par exemple. Le fonctionnement en circuit fermé de l'unité de lavage implique de se raccorder à une arrivée de fluide de l'industriel seulement, ce qui facilite l'installation et la désinstallation du système sur le site de l'industriel.

Selon l'invention, le système comporte également une unité de prélavage de déchets qui comporte un deuxième moyen d'injection d'un fluide de prélavage de sorte que le moyen de mise en mouvement relatif est adapté de sorte qu'en fonctionnement du moyen de mise en mouvement relatif, au moins une partie de la zone de réception de l'unité de réception soit dans une deuxième zone de portée du deuxième moyen d'injection.

L'unité de prélavage comporte un deuxième moyen d'injection, une buse par exemple, d'un fluide de prélavage, préférentiellement de l'eau provenant du réseau d'eau commun, cela permet d'effectuer un prétraitement des déchets qui, selon un mode de réalisation de l'invention, se fait avant le lavage des déchets et permet d'améliorer l'efficacité du lavage ultérieure. Dans ce mode de réalisation, le système comporte donc le premier moyen d'injection et le deuxième moyen d'injection. Les déchets situés sur la zone de réception sont donc prélavés et lavés et/ou désinfectés. Le moyen de mise en mouvement relatif permet de s'assurer qu'au moins une partie de la zone de réception et donc des déchets se retrouvera dans une zone de portée du deuxième moyen d'injection et sera donc prétraitée avec du fluide de prélavage. Ainsi, selon ce mode de réalisation, à un instant donné, une partie de la zone de réception se trouve dans la zone de portée du premier moyen d'injection et une autre partie de la zone de réception se trouve dans la zone de portée du deuxième moyen d'injection.

Selon l'invention, le système comporte également une deuxième zone de récupération d'au moins une partie du fluide de prélavage relié à un dispositif d'évacuation de jus chargés en matière organique.

La deuxième zone de récupération permet également l'évacuation de jus chargés en particules indésirables, des souillures dans le cas où les déchets sont des films plastiques souples souillés par de la matière organique. Cette deuxième zone de récupération permet d'éliminer une grande partie des indésirables pour faciliter et optimiser le lavage ultérieur des déchets. Les indésirables peuvent être récupérés par un dispositif d'évacuation pour être acheminés vers une filière de traitement. Avantageusement, ce mode de réalisation permet également d'éliminer une grande partie de l'eau souillée par de la matière organique dans le cas où le fluide de prélavage est de l'eau. Ladite eau souillée n'est donc pas réintroduite dans les circuits d'eau du système, ce qui assure un lavage des déchets avec une eau propre ne comportant pas de souillures. Cet agencement est optimal pour le lavage des déchets.

Outre les caractéristiques principales qui viennent d'être mentionnées dans le paragraphe précédent, le procédé/dispositif selon l'invention peut présenter une ou plusieurs caractéristiques complémentaires parmi les suivantes, considérées individuellement ou selon les combinaisons techniquement possibles.

Selon un mode de réalisation de l'invention, le système comporte également une unité de rinçage de déchets qui comporte un troisième moyen d'injection d'un fluide de rinçage de sorte que le moyen de mise en mouvement relatif est adapté de sorte qu'en fonctionnement du moyen de mise en mouvement relatif, au moins une partie de la zone de réception de l'unité de réception soit dans une troisième zone de portée du troisième moyen d'injection.

Dans ce mode réalisation, le système comporte le premier moyen d'injection, le deuxième moyen d'injection et un troisième moyen d'injection. L'unité de rinçage comporte ledit troisième moyen d'injection d'un fluide de prélavage, préférentiellement de l'eau provenant du réseau d'eau commun, et permet de rincer les déchets qui, selon un mode de réalisation de l'invention, se fait après le lavage des déchets et permet de s'assurer que les déchets, des films plastiques souples selon un mode de réalisation de l'invention, ne contiennent plus ou très peu d'agent de lavage. Ce qui permet de finaliser le processus de lavage et de produire des films plastiques souples valorisables. De la même façon que le fluide de rinçage rince les déchets, ledit liquide de rinçage se charge en particules d'agent de lavage. Le moyen de mise en mouvement relatif permet de s'assurer qu'au moins une partie de la zone de réception et donc des déchets se retrouvera dans une zone de portée du troisième moyen d'injection et sera donc rincée avec du fluide de rinçage. Ainsi, selon ce mode de réalisation, à un instant donné, une partie de la zone de réception se trouve dans la zone de portée du premier moyen d'injection, une autre partie de la zone de réception se trouve dans la zone de portée du deuxième moyen d'injection, et une autre partie de la zone de réception se trouve dans la zone de portée du troisième moyen d'injection.

Selon un mode de réalisation de l'invention, le système comporte également une deuxième boucle de recirculation du fluide de rinçage depuis une troisième zone de récupération du fluide de rinçage vers le deuxième moyen d'injection.

Dans ce mode de réalisation, la deuxième boucle de recirculation du fluide de rinçage permet dans un premier temps de récupérer et de réutiliser le fluide de rinçage qui est réinjecté au niveau du deuxième moyen d'injection correspondant au moyen d'injection du fluide de prélavage. Selon ce mode de réalisation, le fluide de prélavage comporte au moins une partie du fluide de rinçage. Ce mode de réalisation permet également d'améliorer une nouvelle fois le processus de lavage des déchets. Le fluide de rinçage s'est en effet chargé de particules d'agent de lavage lors du rinçage des déchets et le fluide de prélavage contenant au moins une partie du fluide de rinçage contient donc des particules d'agent de lavage. Le prélavage des déchets, dans ce mode de réalisation de l'invention, entame le processus de lavage des déchets lors du prétraitement des déchets.

Selon un mode de réalisation de l'invention, le système est configuré de sorte que le moyen de mise en mouvement relatif comprend un premier moyen de déplacement d'au moins une partie de la zone de réception dite zone de réception mobile, ledit moyen de mise en mouvement relatif étant arrangé de sorte que ladite zone de réception mobile passe successivement dans la deuxième zone de portée, la première zone de portée et la troisième zone de portée.

Ce mode de réalisation de l'invention permet de s'assurer de l'efficacité du processus de lavage des déchets. Les déchets se trouvant sur la zone de réception passent successivement dans la deuxième zone de portée du premier moyen d'injection, la première zone de portée du premier moyen d'injection et la troisième zone de portée du troisième moyen d'injection. Dans le mode de réalisation de l'invention où les déchets sont des films plastiques souples souillés par de la matière organique, le prélavage permet d'enlever au moins une partie des souillures et d'entamer le processus de lavage des films plastiques souples dans le cas où le fluide de prélavage contient au moins une partie du fluide de rinçage. Les déchets sont ensuite lavés et/ou désinfectés par le fluide de lavage puis sont rincés par le fluide de rinçage. Dans ce mode de réalisation, ce sont bien les unités de prélavage, de lavage et de rinçage qui sont fixes, la zone de réception mobile de l'unité de réception permet aux déchets de passer dans les différentes zones de portée des moyens d'injections.

Selon un mode de réalisation de l'invention, le système est configuré de sorte que le moyen de mise en mouvement relatif est un deuxième moyen de déplacement du premier, deuxième et troisième moyen d'injection arrangé de sorte qu'au moins une partie de la zone de réception, pouvant être statique, se trouve successivement dans la deuxième zone de portée, la première zone de portée et la troisième zone de portée.

Dans ce mode de réalisation de l'invention, ce sont les moyens d'injections des unités de prélavage, de lavage et de rinçage qui sont mobiles et assurent respectivement leur fonction de prélavage, lavage et rinçage sur une zone de réception statique où se trouvent les déchets.

Selon un mode de réalisation de l'invention, l'unité de lavage comporte également une cuve tampon comprenant au moins un capteur de niveau.

Dans ce mode de réalisation, la cuve tampon est apte à contenir le fluide de lavage. Ladite cuve tampon est reliée au premier moyen d'injection du fluide de lavage et au réseau d'eau commun dans le cas où le fluide de lavage est de l'eau du réseau commun. Une vanne pilotée permet l'introduction du fluide dans la cuve tampon. Selon un mode de réalisation la cuve tampon comprend un capteur de niveau ; dans ce cas la vanne pilotée est asservie par ledit capteur de niveau et est ainsi apte à réintroduire du fluide lorsque le niveau de fluide dans la cuve tampon descend sous une valeur seuil prédéterminée. Ce mode de réalisation permet donc de contrôler la quantité de fluide injecté dans le l'unité de lavage.

Selon un mode de réalisation de l'invention, l'unité de lavage comprend également au moins un réservoir apte à contenir un fluide, ledit fluide comprenant de préférence au moins un tensioactif et/ou au moins un agent désinfectant, et une pompe.

Dans un mode de réalisation préférentiel, l'unité de lavage comporte deux réservoirs, un premier réservoir apte à contenir un tensioactif, de préférence un tensioactif choisi parmi le groupe des détergents alcalins, seuls ou en mélange, et un deuxième réservoir apte à contenir un agent désinfectant, de préférence un agent désinfectant choisi parmi le groupe de désinfectant oxydant ou réducteur, seuls ou en mélange. Chaque réservoir est relié à la cuve tampon par l'intermédiaire d'un moyen d'injection apte à introduire un tensioactif et/ou un agent désinfectant dans la cuve tampon. Ce mode de réalisation permet de contrôler la quantité de tensioactif et/ou d'agent désinfectant présent dans le fluide de lavage. Dans le cas où le fluide de lavage est de l'eau, la concentration massique en tensioactif et/ou agent désinfectant sera préférentiellement comprise entre 0.01 et 5 g/L. Ainsi, ce mode de réalisation permet d'avoir une concentration constante en tensioactif et/ou agent désinfectant dans la cuve tampon. Dans un mode de réalisation de l'invention, l'unité de lavage comporte un seul réservoir apte à contenir un fluide qui comporte au moins un tensioactif et un agent désinfectant

Selon un mode de réalisation de l'invention, l'unité de réception apte à recevoir les déchets est une vis de convoyage dont la rotation assure le déplacement longitudinal des déchets en une zone de réception mobile.

Dans ce mode de réalisation, la vis de convoyage est à la fois l'unité de réception des déchets et le premier moyen de déplacement des déchets. Ainsi, la vis de convoyage, préférentiellement une vis de convoyage sans fin ne présentant pas d'âme en son centre, permet de réceptionner les déchets et de les mettre dans les zones de portée des moyens d'injection, à savoir la première zone de portée, la deuxième zone de portée et la troisième zone de portée. L'utilisation d'une vis de convoyage ne présentant pas d'âme en son centre permet de minimiser le risque de bourrage dans le cas où les déchets sont des films plastiques souples, et ainsi d'éviter l'arrêt du système.

Selon un mode de réalisation de l'invention, la vis de convoyage se situe à l'intérieur d'un conduit.

Dans ce mode de réalisation, le conduit entourant la vis de convoyage, la vis de convoyage se situant à l'intérieur dudit conduit, comporte le premier et le troisième moyen d'injection, ainsi que la première et la deuxième zone de récupération. Ce mode de réalisation permet d'éviter les pertes de déchets et donc d'optimiser le rendement du système, mais aussi de d'éviter les pertes de fluide.

Selon un mode de réalisation de l'invention, la deuxième zone de récupération est située dans une première extrémité de l'unité de réception arrangée de sorte que, en fonctionnement du système, la deuxième zone de récupération récupère des jus chargés en matière organique par gravité.

Dans ce mode de réalisation, l'unité de réception, par exemple, forme avec l'horizontale un angle α supérieur à zéro. Dans ce mode de réalisation, l'unité de réception est inclinée et présente donc un point bas et un point haut. Au point bas seront réceptionnés les déchets ayant subi l'étape de prélavage. Ainsi, la deuxième zone de récupération, située dans la première extrémité de l'unité de réception et donc en point bas de ladite unité de réception, est apte à réceptionner les déchets prélavés et, dans le cas où les déchets sont des films plastiques souples souillés par de la matière organique, les jus chargés en matières organiques se dirigeront, par gravité, vers ladite troisième zone de récupération. Avantageusement, ce mode de réalisation permet d'éliminer, par simple gravité, une grande partie des souillures et de faciliter et d'optimiser le lavage ultérieur. Avantageusement, ce mode de réalisation permet également d'éliminer une grande partie de l'eau souillée par de la matière organique. Ladite eau souillée ne sera donc pas réintroduite dans les circuits d'eau du système. Ce mode de réalisation est optimal pour le lavage des déchets.

Selon un mode de réalisation de l'invention, le système de lavage comporte également une unité de broyage des déchets, préférentiellement situé entre le deuxième moyen d'injection et une extrémité de la vis de convoyage, de préférence du côté de la zone de réception.

Dans ce mode de réalisation, l'unité de broyage est préférentiellement un broyeur à couteaux dont l'écartement entre les couteaux est arrangé de sorte que les déchets issus du broyage présentent une granulométrie comprise entre 0.1 cm³ et 200 cm³, préférentiellement entre 0.1 cm³ et 25 cm³. Dans le cas où les déchets sont des films plastiques souples, le broyage de ces derniers permet d'augmenter la surface de contact entre les films plastiques broyés et le fluide de lavage, augmentant ainsi l'efficacité du lavage ultérieur. En effet, dans ce mode de réalisation, l'unité de broyage est située entre le deuxième moyen d'injection du fluide de prélavage et l'extrémité d'entrée de la vis de convoyage. Une gaine de transfert étanche située entre l'unité de broyage et l'extrémité de la vis de convoyage permet d'éviter les pertes des déchets et de protéger l'opérateur du système des éclats de déchets issus du broyage.

Selon un mode de réalisation de l'invention, le fluide de lavage, le fluide de prélavage et le fluide de rinçage sont en partie constitués par de l'eau.

Ce mode de réalisation de l'invention permet un fonctionnement optimal du système de lavage des déchets. L'eau est un fluide facilement accessible et qui ne nécessite pas de disposer d'installations importantes pour son exploitation et son utilisation. De plus, les tensioactifs ainsi que les agents désinfectants utilisés ne perdent pas leurs caractéristiques de lavages et de désinfections lorsqu'ils se retrouvent en solution aqueuse.

L'invention se rapporte également à un procédé de lavage des déchets, préférentiellement des déchets comportant des films plastiques souillées par de la matière organique, ledit procédé comportant :
- une première étape de prélavage des déchets au moyen d'un fluide de prélavage apte à produire au moins des jus chargées en matière organique,
- une deuxième étape de broyage des déchets au moyen d'une unité de broyage,
- une troisième étape de lavage des déchets au moyen d'un fluide de lavage, et
- une quatrième étape de rinçage des déchets au moyen d'un fluide de rinçage ;
et également une cinquième étape de récupération de jus chargés en matière organique, réalisée après la deuxième étape, et apte à évacuer au moins une partie des jus chargées en matières organiques issus de la première étape.

Le procédé selon l'invention permet de traiter des déchets de façon à les laver et à permettre leur valorisation dans des filières de recyclage par exemple. L'étape de prélavage au moyen d'un fluide de prélavage permet d'effectuer un prétraitement qui rendra l'étape de lavage ultérieure plus efficace. Selon un mode de réalisation de l'invention, le fluide de prélavage est de l'eau, et préférentiellement de l'eau comportant un tensioactif et/ou un agent désinfectant. Ladite étape de prélavage permet de produire au moins des jus chargées an matière organique dans le cas où les déchets sont des films plastiques souillées par de la matière organique. L'application du fluide de prélavage sur les déchets permet de retirer desdits déchets une partie des souillures les composants. Avantageusement, une étape de broyage, réalisée avant ou après la première étape de prélavage, permet de diminuer la taille des déchets de façon à augmenter la surface de contact desdits déchets par rapport aux fluides, ce qui rendra le lavage ultérieur plus efficace. La deuxième étape de lavage des déchets au moyen d'un fluide de lavage permet de laver complétement les déchets. Selon un mode de réalisation de l'invention, le fluide de lavage est de l'eau, et préférentiellement de l'eau comportant un tensioactif et/ou un agent désinfectant. Dans le cas où les déchets sont des films plastiques souples souillés par de la matière organique, ladite deuxième étape de lavage permet de produire des films plastiques souples lavés ne comportant plus, ou quasiment plus, de souillures et donc de matière organique. La troisième étape de rinçage au moyen d'un fluide de rinçage permet de rincer les déchets lavés et de permettre leur valorisation dans les filières de recyclage par exemple. Une étape importante de ce procédé est la quatrième étape de récupération des jus chargés en matière organique réalisé après la première étape de prélavage. Ladite étape de récupération des jus permet d'éliminer une grande partie de souillures présentes dans les déchets et de rendre ainsi l'étape de lavage ultérieure encore plus efficace.

### Description des figures

- la figure 1 est une vue schématique d'un mode de réalisation de l'ensemble du système de lavage des déchets,
- la figure 2 est une vue schématique d'un mode de réalisation de l'invention simplifié des différents circuits d'eau du dispositif,
- la figure 3 est une vue très simplifiée du circuit d'eau de l'unité de lavage du système.

### Modes de réalisation

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

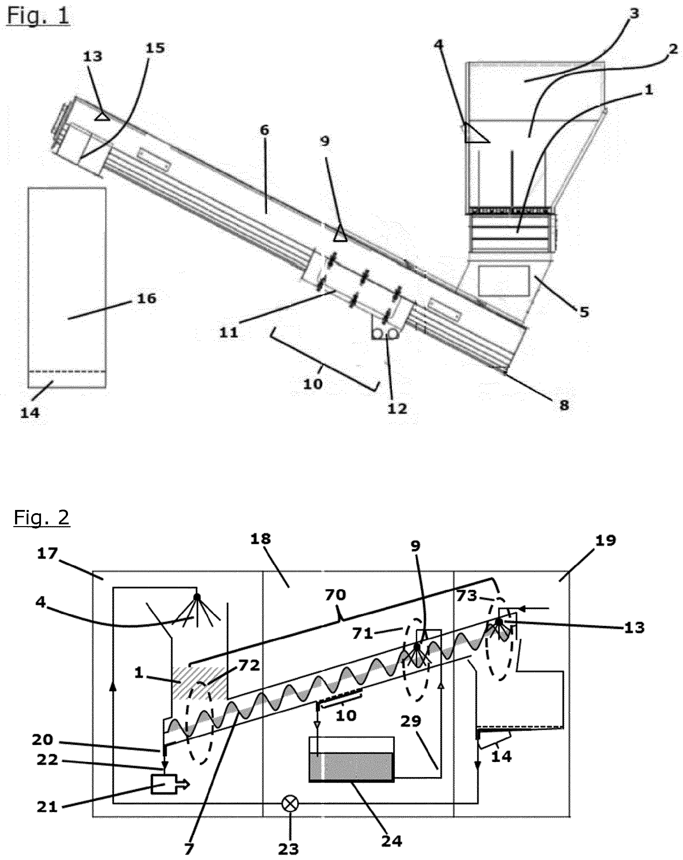

Sur la figure 1 on distingue le système de lavage selon un mode de réalisation de l'invention, dans le cas particulier où les déchets sont des films plastiques souples et que la zone de réception 70 est mobile le long d'une vis de convoyage. Cette vis de convoyage 7 est cachée par son conduit 6 sur la figure 1 et est également le premier moyen de déplacement des déchets. Ce système comprend une unité de broyage (1), préférentiellement un broyeur comprenant des couteaux dont l'écartement est adapté pour obtenir des morceaux de plastiques ayant une granulométrie comprise entre 0.1 cm³ et 200 cm³, préférentiellement entre 0.1 cm³ et 25 cm³. L'homme du métier, à la lumière de ses connaissances, est apte à adapter l'écartement desdits couteaux pour obtenir la granulométrie désirée. Ladite unité de broyage est surmonté d'une trémie de chargement (2) dotée d'un rebord anti-projection (3) destiné à protéger l'utilisateur des éventuelles projections de plastiques mais également pour éviter les pertes de plastiques. Dans la partie haute de la trémie de chargement (2) et à la limite inférieure du rebord anti-projection (3), on trouve le deuxième moyen d'injection du fluide de prélavage (4) matérialisé par une buse selon le mode de réalisation particulier présenté sur la figure 1. On distingue également une gaine de transfert étanche (5) située entre l'unité de broyage (1) et un conduit (6) à l'intérieur duquel se trouve la vis sans fin de convoyage ne présentant pas d'âme en son centre, non visible sur la figure 1. On distingue également, en point bas (8) de la vis de convoyage, la deuxième zone de récupération (20), non visible sur la figure 1, dans ledit conduit (6). On trouve également le premier moyen d'injection (9) du fluide de lavage et la première zone de récupération (10) du fluide de lavage associée. Ledit premier moyen d'injection (9) du fluide de lavage, matérialisé par une buse selon le mode de réalisation particulier présenté sur la figure 1, est situé aux alentours des deuxièmes et troisièmes quarts de la vis de convoyage (7), disposé au-dessus et dirigé vers ladite vis. Ladite première zone de récupération du fluide de lavage (10) est située aux alentours de la partie basse des deuxièmes et troisièmes quarts de la vis de convoyage (7) et en aval du premier moyen d'injection (9) du fluide de lavage. Ladite première zone de récupération du fluide de lavage (10) est matérialisée par un panier perforé (11) et un système d'évacuation (12) selon le mode de réalisation particulier présenté sur la figure 1. On distingue également un troisième moyen d'injection (13) d'un fluide de rinçage, situé dans le quart supérieur de la partie haute de la vis de convoyage (7), situé au-dessus et dirigé vers ladite vis de convoyage (7), et associé à une troisième zone de récupération du fluide de rinçage (14). Au niveau de la partie située en aval du conduit (6) se trouve une ouverture (15) située dans la partie inférieure dudit conduit (6) permettant la récupération dans un bac de stockage (16) des films plastiques lavés.

Sur la figue 2 on distingue l'unité de prélavage (17), l'unité de lavage (18) et l'unité de rinçage (19) du système de lavage, ainsi que leur circuit d'eau respectif, représentés de façon schématique simplifiée. L'unité de prélavage (17) comporte un deuxième moyen d'injection (4) du fluide de prélavage auquel est associé une deuxième zone de récupération (20) des jus chargés en matières organiques (22) situé en point bas (8) de la vis de convoyage (7). Ladite deuxième zone de récupération (20) des jus chargés en matière organique (22) comporte, selon le mode de réalisation particulier présenté en figure 2, une ouverture et un système d'évacuation (21) des jus chargés en matière organique (22). Ainsi, le débit d'évacuation desdits jus chargés en matière organique (22), égal au débit d'apport en eau de prélavage, est compris entre 0.5 m³/h et 5 m³/h, préférentiellement entre 0.8 m³/h et 2 m³/h. L'homme du métier, à la lumière de ses connaissances, est apte à ajuster le débit d'apport en eau de prélavage en fonction de la quantité de plastique à traiter. L'unité de rinçage (19) est constituée par le troisième moyen d'injection (13) du fluide de rinçage, situé dans le quart supérieur de la partie haute de la vis de convoyage (7) et dirigé vers ladite vis, et par la troisième zone de récupération (14) du fluide de rinçage. Le débit en apport d'eau de rinçage est compris entre 0.5 m³/h et 5 m³/h, préférentiellement entre 0.8 m³/h et 2 m³/h. L'homme du métier, à la lumière de ses connaissances, est apte à ajuster le débit d'apport en eau de prélavage en fonction de la quantité de plastique à traiter. En pratique, un débit de 1m³/h permet de traiter entre 300 et 500 kg de déchets par heure. Le fluide de rinçage récupéré par la troisième zone de récupération (14) du fluide de rinçage est ensuite envoyé, par l'intermédiaire d'une première pompe de relevage (23), vers l'unité de prélavage (17). Ainsi, le fluide de prélavage est en partie constitué par au moins une partie du fluide de rinçage. On trouve également une unité de lavage (18) fonctionnant en circuit fermé. Le circuit du fluide de lavage est caractérisé par une première boucle de recirculation du fluide de lavage. Ledit fluide est injecté par l'intermédiaire du premier moyen d'injection (9) du fluide de lavage et est ensuite récupéré au niveau de la première zone de récupération (10) du fluide de lavage. Le débit d'apport en fluide de lavage est compris entre 0.1 m³/h et 0.15 m³/h, préférentiellement entre 0.12 m³/h et 0.13 m³/h.

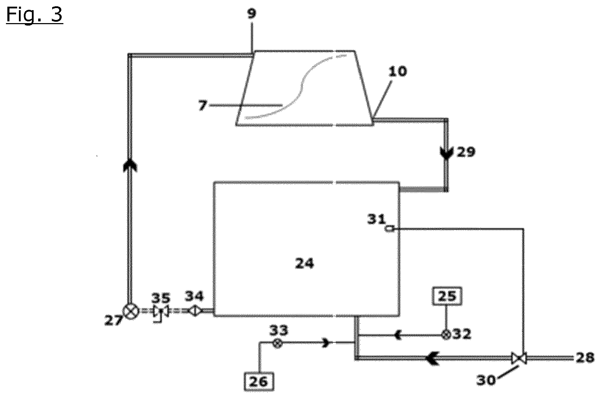

Sur la figure 3 est illustré le système de réajustement du fluide de lavage en eau propre du réseau, en tensioactif et en agent désinfectant, dans le cas où le fluide de lavage est en partie constitué par de l'eau. On distingue la présence d'une cuve tampon (24), d'un réservoir de tensioactif (25) et d'un réservoir d'agent désinfectant (26), une arrivée d'eau réseau (28) et le circuit de retour de l'eau de lavage (29) provenant de la première zone de récupération (10) du fluide de lavage. Dans le mode de réalisation représenté, le retour du fluide de lavage depuis la première zone de récupération (10) de l'eau de lavage vers la cuve tampon (24), par l'intermédiaire dudit circuit (29), s'effectue par simple gravité, alors que l'acheminement du fluide de lavage depuis la cuve tampon (24) vers le premier moyen d'injection (9) du fluide de lavage s'effectue par l'intermédiaire d'une deuxième pompe de relevage (27). On distingue également, entre la cuve tampon (24) et la deuxième pompe de relevage (27), un clapet anti-retour (34) et une vanne de réglage manuelle (35). L'ajout d'eau propre du réseau dans la cuve tampon (24), en vue de compenser les éventuelles pertes, s'effectue par l'intermédiaire d'une vanne pilotée (30) asservie par un capteur de niveau d'eau (31) située dans la cuve tampon (24). Ainsi, lorsque le niveau d'eau dans la cuve tampon (24) descend sous une valeur prédéfinie, de l'eau propre du réseau est réinjectée dans ladite cuve (24) par l'intermédiaire de la vanne pilotée (30) de manière à retrouver un niveau d'eau prédéfinie dans la cuve tampon (24). On distingue également un premier point d'injection (32) permettant de réintroduire une quantité de tensioactif adéquate pour maintenir une concentration stable en tensioactif dans la cuve tampon (24) du fait de l'ajout d'eau propre du réseau dans la cuve tampon (24), et un deuxième point d'injection (33) permettant de réintroduire une quantité d'agent désinfectant adéquate pour maintenir une concentration stable en agent désinfectant dans la cuve tampon (24) du fait de l'ajout d'eau propre du réseau dans la cuve tampon (24).

Selon un mode de réalisation particulier, non représenté par un dessin, l'unité de lavage ne comprend plus de réservoirs de tensioactif et d'agent désinfectant, mais un réservoir unique comprenant au moins un tensioactif et/ou un agent désinfectant. Un troisième point d'injection permet de réintroduire une quantité de tensioactif et/ou d'agent désinfectant adéquate pour maintenir une concentration stable en tensioactif et/ou agent désinfectant dans la cuve tampon (24) du fait de l'ajout d'eau propre du réseau dans la cuve tampon (24).

Ainsi, les films plastiques à traiter sont introduits dans le dispositif par l'intermédiaire de la trémie de chargement (2) et subissent un prélavage au niveau du deuxième moyen d'injection (4) du fluide de prélavage. Ils s'acheminent ensuite par gravité dans l'unité de broyage (1) où ils sont broyés. En sortie du système de broyage (1), les films plastiques broyés passent par la gaine étanche (5) pour se retrouver dans le conduit (6) contenant la vis de convoyage (7) sans fin et ne présentant pas d'âme en son centre, ce qui permet d'éviter les bourrages et donc l'arrêt du dispositif. Le prélavage effectué permet d'éliminer une partie des matières organiques présentes sur les films plastiques, et la deuxième zone de récupération (20) située en point bas (8) de la vis de convoyage (7) permet l'évacuation des jus chargés en matières organiques (22) vers une filière de traitement par l'intermédiaire du système d'évacuation (21). L'évacuation des jus chargés en matières organique (21) se fait par simple gravité, le conduit (6) formant avec le sol formant un angle compris entre 30 et 45 degrés qui permet auxdits jus de se diriger vers la deuxième zone de récupération (20). Les films plastiques broyés sont acheminés vers le point haut de la vis de convoyage par ladite vis (7). Au niveau du premier moyen d'injection du fluide de lavage (9), les films plastiques broyés sont traités avec le fluide de lavage et au niveau du troisième moyen d'injection (13) du fluide de rinçage, les films plastiques broyés sont traités avec le fluide de rinçage. Les films plastiques broyés et traités sont ensuite récupérés dans le bac de stockage (16).

L'invention n'est pas limitée aux modes de réalisations précédemment décrits en référence aux figures et des variantes pourraient être envisagées sans sortir du cadre de l'invention.

## Revendications

1. Système de lavage de déchets comportant :
• une unité de réception (7) adaptée pour recevoir des déchets dans au moins une zone de réception, pouvant être mobile (70) ou statique,
• une unité de lavage (18) des déchets comportant un premier moyen d'injection (9) d'un fluide de lavage,
• un moyen de mise en mouvement relatif d'au moins l'unité de lavage (18) et de l'unité de réception (7) l'une par rapport à l'autre de sorte que, en fonctionnement du moyen de mise en mouvement relatif :
∘ au moins une partie de ladite zone de réception de l'unité de réception (7) soit dans une première zone de portée (71) du premier moyen d'injection (9), et
∘ au moins une partie de la zone de réception de l'unité de réception (7) soit dans une deuxième zone de portée (72) du deuxième moyen d'injection (4),
• une première boucle de recirculation (29) du fluide de lavage depuis une première zone de récupération (10) du fluide de lavage vers le premier moyen d'injection (9),
le système de lavage étant **caractérisé en ce qu'**il comporte également une unité de prélavage (17) de déchets qui comporte un deuxième moyen d'injection (4) d'un fluide de prélavage,
et **en ce que** le système de lavage comporte une deuxième zone de récupération (20) d'au moins une partie du fluide de prélavage reliée à un dispositif d'évacuation (21) de jus chargés en matière organique (22) et agencée pour que l'au moins une partie du fluide de prélavage ne soit pas réintroduite dans le système de lavage.

2. Système selon la revendication 1 **caractérisé en ce que** :
• il comporte également une unité de rinçage (19) de déchets qui comporte un troisième moyen d'injection (13) d'un fluide de rinçage,
• et **en ce que** le moyen de mise en mouvement relatif est adapté de sorte qu'en fonctionnement du système de mouvement relatif, au moins une partie de la zone de réception de l'unité de réception (7) soit dans une troisième zone de portée (73) du troisième moyen d'injection (13).

3. Système selon la revendication 2 **caractérisé en ce que** le système de lavage comporte une deuxième boucle de recirculation du fluide de rinçage depuis une troisième zone de récupération (14) du fluide de rinçage vers le deuxième moyen d'injection (4).

4. Système selon la revendication 2 **caractérisé en ce que** le moyen de mise en mouvement relatif comprend un premier moyen de déplacement (7) d'au moins une partie de la zone de réception dite zone de réception mobile (70), ledit moyen de mise en mouvement relatif étant arrangé de sorte qu'au moins une partie de ladite zone de réception mobile (70) passe successivement dans la deuxième zone de portée (72), la première zone de portée (71) et la troisième zone de portée (73).

5. Système selon la revendication 2 **caractérisé en ce que** le moyen de mise en mouvement relatif est un deuxième moyen de déplacement du premier (9), deuxième (4) et troisième (13) moyens d'injection arrangé de sorte qu'au moins une partie de la zone de réception, pouvant être statique, se trouve successivement dans la deuxième zone de portée (72), la première zone de portée (71) et la troisième zone de portée (73).

6. Système selon l'une quelconque des revendications précédentes **caractérisé en ce que** l'unité de lavage comporte une cuve tampon (24) comprenant au moins un capteur de niveau (31).

7. Système selon l'une quelconque des revendications précédentes **caractérisé en ce que** l'unité de lavage comprend au moins un réservoir (25, 26) apte à contenir un fluide, ledit fluide comprenant de préférence au moins et tensioactif et/ou au moins un agent désinfectant, et une pompe (27).

8. Système selon l'une quelconque des revendications précédentes **caractérisé en ce que** l'unité de réception (7) est une vis de convoyage (7) dont la rotation assure le déplacement longitudinal des déchets en une zone de réception mobile (70).

9. Système selon la revendication 8 **caractérisé en ce que** la vis de convoyage (7) se situe à l'intérieur d'un conduit (6).

10. Système selon l'une quelconque des revendications précédentes **caractérisé en ce que** la deuxième zone de récupération (20) est située dans une première extrémité de l'unité de réception (7) et **en ce que** l'unité de réception (7) est arrangée de sorte que, en fonctionnement du système, la deuxième zone de récupération (20) récupère des jus chargés en matière organique (22) par gravité.

11. Système selon l'une quelconque des revendications précédentes **caractérisé en ce que** le système de lavage comprend une unité de broyage (1) des déchets, préférentiellement situé entre le deuxième moyen d'injection (4) et l'extrémité de la vis de convoyage (7).

12. Système selon l'une quelconque des revendications précédentes **caractérisé en ce que** le fluide de lavage, le fluide de prélavage et le fluide de rinçage sont en partie constitués par de l'eau.

13. Procédé de lavage des déchets par un système de lavage de déchets, préférentiellement des déchets comportant des films plastiques souillés par de la matière organique, ledit procédé comportant :
• Une première étape de prélavage des déchets au moyen d'un fluide de prélavage, apte à produire au moins des jus chargés en matière organique,
• Une deuxième étape de lavage des déchets au moyen d'un fluide de lavage, et
• Une troisième étape de rinçage des déchets au moyen d'un fluide de rinçage ;
**caractérisé en ce que** une quatrième étape de récupération de jus chargés en matière organique, apte à évacuer au moins une partie des jus chargées en matières organiques issus de la première étape, est réalisée après la première étape et **en ce que** les jus évacués ne sont pas réintroduits dans le système de lavage des déchets.

## Patentansprüche

1. Abfallwaschsystem, umfassend:
• eine Aufnahmeeinheit (7), die ausgelegt ist, Abfälle in mindestens einem Aufnahmebereich aufzunehmen, der beweglich (70) oder statisch sein kann,
• eine Abfallwascheinheit (18), die ein erstes Mittel (9) zum Einspritzen eines Waschfluids umfasst,
• ein Relativbewegungsmittel für mindestens die Wascheinheit (18) und die Aufnahmeeinheit (7) in dem Verhältnis zueinander, so dass bei dem Betrieb des Relativbewegungsmittels:
∘ mindestens ein Teil des Aufnahmebereichs der Aufnahmeeinheit (7) in einer ersten Reichweite (71) des ersten Einspritzmittels (9) liegt, und
∘ mindestens ein Teil des Aufnahmebereichs der Aufnahmeeinheit (7) in einer zweiten Reichweite (72) des zweiten Einspritzmittels (4) liegt,
• eine erste Rezirkulationsschleife (29) des Waschfluids von einem ersten Rückgewinnungsbereich (10) des Waschfluids zum ersten Einspritzmittel (9), wobei das Waschsystem **dadurch gekennzeichnet ist, dass** es auch eine Abfallvorwascheinheit (17) umfasst, die ein zweites Einspritzmittel (4) eines Vorwaschfluids umfasst,
und dass das Waschsystem einen zweiten Rückgewinnungsbereich (20) für mindestens einen Teil des Vorwaschfluids umfasst, der mit einer Ableitungsvorrichtung (21) für mit organischen Stoffen beladene Säfte (22) verbunden und so angeordnet ist, dass der mindestens eine Teil des Vorwaschfluids nicht wieder in das Waschsystem eingebracht wird.

2. System nach Anspruch 1, **dadurch gekennzeichnet, dass**:
• es auch eine Abfallspüleinheit (19) umfasst, die ein drittes Einspritzmittel (13) für ein Spülfluid umfasst,
• und dass das Relativbewegungsmittel so ausgelegt ist, dass bei dem Betrieb des Relativbewegungssystems mindestens ein Teil des Aufnahmebereichs der Aufnahmeeinheit (7) in einer dritten Reichweite (73) des dritten Einspritzmittels (13) liegt.

3. System nach Anspruch 2, **dadurch gekennzeichnet, dass** das Waschsystem eine zweite Rezirkulationsschleife des Spülfluids von einem dritten Rückgewinnungsbereich (14) des Spülfluids zum zweiten Einspritzmittel (4) umfasst.

4. System nach Anspruch 2, **dadurch gekennzeichnet, dass** das Relativbewegungsmittel ein erstes Verschiebemittel (7) mindestens eines Teils des Aufnahmebereichs, des sogenannten beweglichen Aufnahmebereichs (70), enthält, wobei das Relativbewegungsmittel so angeordnet ist, dass mindestens ein Teil des beweglichen Aufnahmebereichs (70) nacheinander die zweite Reichweite (72), die erste Reichweite (71) und die dritte Reichweite (73) durchläuft.

5. System nach Anspruch 2, **dadurch gekennzeichnet, dass** das Relativbewegungsmittel ein zweites Verschiebemittel des ersten (9), des zweiten (4) und des dritten (13) Einspritzmittels ist, das so angeordnet ist, dass sich mindestens ein Teil des Aufnahmebereichs, der statisch sein kann, nacheinander in der zweiten Reichweite (72), der ersten Reichweite (71) und der dritten Reichweite (73) befindet.

6. System nach einem der vorhergehenden Ansprüche, **dadurch gekennzeichnet, dass** die Wascheinheit einen Pufferbehälter (24) umfasst, der mindestens einen Füllstandsensor (31) enthält.

7. System nach einem der vorhergehenden Ansprüche, **dadurch gekennzeichnet, dass** die Wascheinheit mindestens einen Behälter (25, 26), der geeignet ist, ein Fluid zu enthalten, wobei das Fluid vorzugsweise mindestens ein Tensid und/oder mindestens ein Desinfektionsmittel enthält, und eine Pumpe (27) enthält.

8. System nach einem der vorhergehenden Ansprüche, **dadurch gekennzeichnet, dass** die Aufnahmeeinheit (7) eine Förderschnecke (7) ist, deren Drehung die Längsverschiebung des Abfalls in einem beweglichen Aufnahmebereich (70) gewährleistet.

9. System nach Anspruch 8, **dadurch gekennzeichnet, dass** sich die Förderschnecke (7) innerhalb eines Kanals (6) befindet.

10. System nach einem der vorhergehenden Ansprüche, **dadurch gekennzeichnet, dass** sich der zweite Rückgewinnungsbereich (20) in einem ersten Ende der Aufnahmeeinheit (7) befindet und dass die Aufnahmeeinheit (7) so angeordnet ist, dass bei dem Betrieb des Systems der zweite Rückgewinnungsbereich (20) mit organischen Stoffen beladene Säfte (22) durch Schwerkraft sammelt.

11. System nach einem der vorhergehenden Ansprüche, **dadurch gekennzeichnet, dass** das Waschsystem eine Zerkleinerungseinheit (1) für Abfalls enthält, die sich vorzugsweise zwischen dem zweiten Einspritzmittel (4) und dem Ende der Förderschnecke (7) befindet.

12. System nach einem der vorhergehenden Ansprüche, **dadurch gekennzeichnet, dass** das Waschfluid, das Vorwaschfluid und das Spülfluid teilweise aus Wasser bestehen.

13. Verfahren zum Waschen von Abfällen durch ein Abfallwaschsystem, vorzugsweise von Abfällen mit Kunststofffolien, die mit organischen Stoffen verunreinigt sind, wobei das Verfahren Folgendes umfasst:
• einen ersten Schritt des Vorwaschens der Abfälle mittels eines Vorwaschfluids, das geeignet ist, mindestens mit organischen Stoffen beladene Säfte zu produzieren,
• einen zweiten Schritt des Waschens des Abfalls mittels eines Waschfluids, und
• einen dritten Schritt des Spülens des Abfalls mittels eines Spülfluids; **dadurch gekennzeichnet, dass** nach dem ersten Schritt ein vierter Schritt der Rückgewinnung von mit organischen Stoffen beladenen Säften durchgeführt wird, der geeignet ist, mindestens einen Teil der mit organischen Stoffen beladenen Säfte aus dem ersten Schritt abzuleiten, und dass die abgeleiteten Säfte nicht wieder in das Abfallwaschsystem eingebracht werden.

## Claims

1. Waste washing system including:
• a receiving unit (7) adapted to receive waste in at least one receiving area, which may be movable (70) or static,
• a waste washing unit (18) including a first means (9) for injecting a washing fluid,
• a means for moving at least the washing unit (18) and the receiving unit (7) relative to each other so that, in operation of the means for moving relatively:
∘ at least a portion of said receiving area of the receiving unit (7) is in a first range area (71) of the first injection means (9), and
∘ at least caution of the receiving area of the receiving unit (7) is in a second range area (72) of the second injection means (4),
• a first loop (29) for recirculating the washing fluid from a first zone (10) for recovering the wash fluid to the first injection means (9), the washing system being **characterised in that** it also includes a waste pre-wash unit (17) that includes a second means (4) for injecting a pre-wash fluid,
and **in that** the washing system includes a second zone (20) for recovering at least a portion of the pre-wash fluid connected to a device (21) for discharging juices laden with organic matter (22) and arranged so that the at least a portion of the pre-wash fluid is not reintroduced into the washing system.

2. System according to claim 1, **characterised in that**:
• it also includes a waste rinsing unit (19) that includes a third means (13) for injecting a rinsing fluid,
• and **in that** the relative movement means is adapted such that, in operation of the relative movement system, at least portion of the receiving area of the receiving unit (7) is in a third range area (73) of the third injection means (13).

3. System according to claim 2, **characterised in that** the washing system includes a second loop for recirculating the rinsing fluid from a third zone (14) recovering the rinsing fluid to the second injection means (4).

4. System according to claim 2, **characterised in that** the relative movement means comprises a first means (7) of moving at least a part of the reception zone, referred to as the movable reception zone (70), said relative movement means being arranged so that at least a part of said movable reception zone (70) successively passes through the second range zone (72), the first range zone (71) and the third range zone (73).

5. System according to claim 2, **characterised in that** the relative movement means is a second means for moving the first (9), second (4) and third (13) injection means arranged so that at least a part of the receiving zone, which can be static, is successively located in the second range zone (72), the first range zone (71) and the third range zone (73).

6. System according to any one of the preceding claims, **characterised in that** the washing unit includes a buffer tank (24) comprising at least one level sensor (31).

7. System according to any one of the preceding claims, **characterised in that** the washing unit comprises at least one reservoir (25, 26) capable of containing a fluid, said fluid preferably comprising at least one and surfactant and/or at least one disinfectant agent, and a pump (27).

8. System according to any one of the preceding claims, **characterised in that** the receiving unit (7) is a conveying screw (7) the rotation of which provides the longitudinal movement of the waste in a movable receiving zone (70).

9. System according to claim 8, **characterised in that** the conveying screw (7) is located inside a duct (6).

10. System according to any one of the preceding claims, **characterised in that** the second recovery zone (20) is located in a first end of the receiving unit (7) and **in that** the receiving unit (7) is arranged so that, in operation of the system, the second recovery zone (20) recovers juices laden with organic matter (22) by gravity.

11. System according to any one of the preceding claims, **characterised in that** the washing system comprises a unit (1) for grinding the waste, preferably located between the second injection means (4) and the end of the conveying screw (7).

12. System according to any one of the preceding claims, **characterised in that** the washing fluid, the pre-wash fluid and the rinsing fluid are partly made up of water.

13. Method for washing waste by a waste washing system, preferentially waste including plastic films soiled with organic matter, said method including:
• A first step of pre-washing the waste by means of a pre-wash fluid, capable of producing at least juices laden with organic matter,
• A second step of washing the waste by means of a washing fluid, and
• A third step of rinsing the waste by means of a rinsing fluid; **characterised in that** a fourth step of recovering organically charged juices, capable of evacuating at least a portion of the juices laden with organic matter coming from the first step, is performed after the first step, and **in that** the discharged juices are not reintroduced into the waste washing system.
